# FASCICULE DE BREVET EUROPEEN

(11) **EP 3 056 703 B1**
(45) Date de publication et mention de la délivrance du brevet: **14.06.2017**
(21) Numéro de dépôt: 16153735.2
(22) Date de dépôt: 02.02.2016
(51) Int. Cl.: F01N 3/20

(54) **PROCÉDÉ ET SYSTÈME DE RÉDUCTION DES OXYDES D'AZOTES ISSUS D'UN MOTEUR À COMBUSTION INTERNE**
VERFAHREN UND SYSTEM ZUR REDUKTION VON AUS EINER BRENNKRAFTMASCHINE AUSTRETENDEN STICKOXIDEN
METHOD AND SYSTEM FOR REDUCING NITROGEN OXIDES EMITTED FROM AN INTERNAL COMBUSTION ENGINE

(30) Priorité: 10.02.2015 FR 1551078
(43) Date de publication de la demande: 17.08.2016
(73) Titulaire: Peugeot Citroën Automobiles SA, 78140 Vélizy-Villacoublay (FR)
(72) Inventeur: CLAVEL, Guillaume, 56230 Bérric (FR); BERNARD, Yoan, 78570 Andresy (FR); ZUMI, Michel, 92600 Asnières-sur-Seine (FR)

(56) Documents cités:
- EP-A1- 2 573 371
- EP-A1- 2 762 694
- FR-A1- 2 933 736
- FR-A1- 2 956 696
- US-B1- 7 824 636

## Description

L'invention a trait au domaine de la dépollution des gaz rejetés par les moteurs diesel.

Les gaz d'échappement des moteurs diesel contiennent des éléments polluants dont il est préférable de limiter les rejets dans l'atmosphère. Ces éléments polluants proviennent de la combustion du carburant diesel et comprennent des oxydes d'azote (couramment désignés sous l'acronyme NOx), du monoxyde de carbone (CO), du carburant imbrûlé ou encore des particules de suie.

Une fois la combustion terminée, les gaz d'échappement quittent le moteur et sont canalisés vers une ligne d'échappement, les gaz subissant plusieurs traitements par catalyse et filtration afin qu'en soient au moins partiellement extraits certains éléments nocifs.

L'élimination des NOx des gaz d'échappement peut être effectuée par différentes méthodes. L'une des méthodes consiste à renvoyer une partie des gaz d'échappement vers le moteur, cette technique appelée usuellement EGR pour l'acronyme de l'expression anglaise « Exhaust Gas Recyclation » permet de réduire la température de combustion qui est un paramètre d'ordre 1 dans la formation des NOx. D'autres dispositifs piègent les NOx par adsorption, ces pièges étant connus sous l'acronyme anglais LNT pour « Lean NOx Trap ». Il existe également des systèmes plus élaborés comme la réduction catalytique sélective qui consiste à injecter une solution réductrice des NOx, l'injection étant pilotée de manière dynamique afin de tenir compte des proportions stoechiométriques définies par les réactions suivantes :

4NH₃ + 4NO + O₂ → 4N₂ + 6H₂O

2NH₃ + NO + NO₂ → 2N₂ + 3H₂O

4NH₃ + 2NO₂ + O₂ → 3N₂ + 6H₂O

L'utilisation d'un système de réduction catalytique sélective implique que le véhicule soit équipé de moyens lui permettant de déterminer la quantité de NOx produite lors de la combustion, et ceci de manière instantanée.

Le document FR2933736 propose un procédé de dépollution dont l'une des étapes consiste à comparer la quantité de NOx produite dans le moteur avec une consigne. Dans l'hypothèse où la quantité de NOx produite est supérieure à la consigne, le procédé démarre une étape de dépollution consistant à utiliser à la fois le dispositif de dépollution se présentant sous la forme d'un catalyseur et à agir sur divers paramètres de la combustion.

Cette méthode présente des carences. Lorsque le véhicule est utilisé dans des conditions extérieures éloignées de conditions nominales, le niveau de NOx émis par le moteur est largement supérieur à celui d'une utilisation nominale. La dépollution nécessite, pour traiter la totalité des NOx produits, que de grands débits d'un agent réducteur soient injectés. Ces débits sont parfois même au-dessus des limites du dispositif de dépollution réduisant, ainsi, sa durée de vie.

Un objet de l'invention est un procédé de dépollution qui permette de dépolluer correctement les oxydes d'azote contenus dans les gaz d'échappement quand le moteur est utilisé dans des conditions extérieures éloignées de conditions nominales, tout en assurant une grande durée de vie du dispositif de dépollution.

Pour atteindre cet objectif, il est prévu selon l'invention un procédé de dépollution des oxydes d'azotes issus d'un moteur à combustion interne comprenant une ligne d'échappement, ce procédé de dépollution étant au moins partiellement mis en oeuvre dans un catalyseur disposé dans la ligne d'échappement, ce procédé comprenant les étapes de :
- détermination d'une quantité d'oxydes d'azote réellement produite par le moteur pour un point de fonctionnement moteur donné,
- détermination d'une cible de quantité d'oxydes d'azote dans les gaz d'échappement au point de fonctionnement moteur donné à ne pas dépasser en sortie de la ligne d'échappement,
- comparaison de la quantité d'oxydes d'azote réellement produite par le moteur au point de fonctionnement moteur donné avec cette cible de quantité d'oxydes d'azote à ne pas dépasser, et si la quantité d'oxydes d'azote réellement produite par le moteur est supérieure à cette cible de quantité d'oxydes d'azote à ne pas dépasser, traitement des oxydes d'azote, tant que la quantité d'oxydes d'azote réellement produite est supérieure à la consigne de quantité d'oxydes d'azote à ne pas dépasser à la sortie de la ligne d'échappement,
caractérisé en ce que la cible de quantité d'oxydes d'azote dans les gaz d'échappement à ne pas dépasser à la sortie de la ligne d'échappement est déterminée en fonction de la pression extérieure.

Diverses caractéristiques supplémentaires peuvent être prévues, seules ou en combinaison :
L'étape de comparaison comprend la détermination de l'écart entre la quantité d'oxydes d'azote réellement produite par le moteur au point de fonctionnement moteur donné et la cible de quantité d'oxydes d'azote à ne pas dépasser.

L'étape de traitement des oxydes d'azote comprend le calcul d'une quantité d'un agent réducteur des oxydes d'azote requise pour traiter cet écart et l'injection de cet agent réducteur dans la ligne d'échappement.

La quantité d'un agent réducteur des oxydes d'azote requise pour traiter cet écart est compatible avec les limites physiques et contraintes de durabilité des composants.

La pression extérieure est mesurée de manière continue grâce à un capteur de pression.

La détermination de la quantité d'oxydes d'azote réellement produite par le moteur se fait par une sonde positionnée en aval du moteur et en amont du catalyseur ou par un estimateur.

La détermination de la cible de quantité d'oxydes d'azote dans les gaz d'échappement à ne pas dépasser en sortie de la ligne d'échappement se fait à l'aide d'une fonction de transfert dont l'entrée est la pression extérieure et la sortie est la cible de quantité d'oxydes d'azote dans les gaz d'échappement à ne pas dépasser à la sortie de la ligne d'échappement.

L'invention a aussi pour objet un système de dépollution comprenant :
- un catalyseur de réduction catalytique sélectif,
- un réservoir d'un agent réducteur des oxydes d'azote,
- un circuit d'injection muni d'une pompe et d'un injecteur en amont du catalyseur de réduction catalytique sélectif,
caractérisé en ce qu'il comprend :
- une unité de commande électronique comprenant les moyens d'acquisition, de traitement par instructions logicielles stockées dans une mémoire ainsi que les moyens de commande requis à mise en oeuvre du procédé de dépollution selon l'une quelconque des variantes précédemment décrites.

Dans une variante, de ce système de dépollution l'agent réducteur est de l'ammoniac ou un précurseur liquide de l'ammoniac.

L'invention a aussi pour objet un véhicule automobile comprenant un système de dépollution de l'invention.

### Brève description des dessins

D'autres particularités et avantages apparaîtront à la lecture de la description ci-après d'un mode particulier de réalisation, non limitatif de l'invention, faite en référence aux figures dans lesquelles :
- la figure 1 est une vue en perspective d'un véhicule automobile muni d'un système de dépollution,
- la figure 2 est une vue schématique d'un système de dépollution,
- la figure 3 est une vue schématique des étapes de calcul du procédé de dépollution.

### Description détaillée

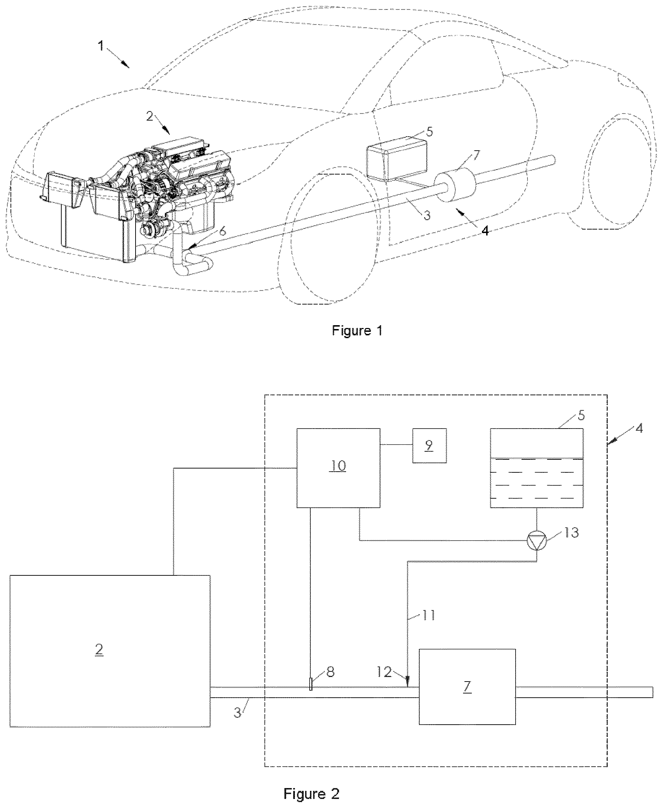

Le véhicule 1 automobile représenté en figure 1 comprend un groupe motopropulseur comprenant un moteur 2 à combustion interne à allumage par compression par exemple de type Diesel, associé des moyens de transmission (non représentés) reliés au moteur 2 et disposés entre ce moteur et les roues du véhicule.

Le groupe motopropulseur comprend encore une ligne 3 d'échappement reliée au moteur 2 thermique. Les produits de la combustion contiennent, à la sortie des chambres de combustion du moteur 2, des gaz, notamment des oxydes d'azote, NOx. Les gaz d'échappement sont évacués du moteur 2 par la ligne 3 d'échappement. La ligne 3 d'échappement débute à la sortie des chambres de combustion par un collecteur 6 d'échappement permettant de collecter les gaz des chambres de combustion pour les réunir dans un seul conduit débouchant dans l'atmosphère.

La ligne 3 d'échappement comprend un système 4 de dépollution des oxydes d'azote, NOx, contenus dans les gaz d'échappement avant leur rejet dans l'atmosphère. Ce système 4 de dépollution est un système 4 de dépollution des oxydes d'azote par réduction catalytique sélective. A cet effet, il comprend un catalyseur de réduction catalytique sélectif 7 ou SCR conçu pour traiter les oxydes d'azote, NOx, et un réservoir 5 d'un agent réducteur des oxydes d'azote. L'agent réducteur des oxydes d'azote est de préférence de l'ammoniac ou un précurseur liquide de l'ammoniac tel qu'une solution aqueuse d'urée.

L'amont et l'aval étant ici défini relativement au sens d'écoulement des gaz d'échappement du moteur vers la sortie de la ligne d'échappement, le système 4 de dépollution, illustré de manière plus détaillée sur la figure 2, comprend également :
- une sonde 8 montée sur le conduit en aval du moteur et en amont du catalyseur 7 ayant pour fonction de mesurer le taux de NOx dans les gaz d'échappement à la sortie du moteur,
- un capteur 9 de pression mesurant la pression extérieure au moteur 2, autrement dit la pression ambiante.
- un circuit 11 d'injection raccordant le réservoir 5 d'agent réducteur des oxydes d'azote à la ligne 3 d'échappement, en amont du SCR 7.
- une pompe 13 d'injection disposée sur le circuit 9 d'injection et un injecteur 12 permettant de contrôler l'injection d'urée dans la ligne 3 d'échappement, en amont du SCR 7.
- une unité de commande électronique 10 à laquelle est connectée la sonde 8 et le capteur 9 de pression. L'unité de unité de commande électronique 12 est également agencée pour piloter la pompe 10 d'injection et injecteur 11 de sorte à piloter l'injection d'urée en solution aqueuse depuis le réservoir 5.

Cette unité de commande électronique 10 peut être intégrée à un calculateur de contrôle moteur. Ce calculateur gère le fonctionnement du groupe motopropulseur. A cet effet, cette unité de commande électronique 10 comprend les moyens d'acquisition, de traitement par instructions logicielles stockées dans une mémoire ainsi que les moyens de commande requis à mise en oeuvre du procédé de l'invention décrit plus loin.

Rappelons qu'un SCR 7 est un dispositif utilisé sur les véhicules diesel pour traiter les NOx présents dans les gaz d'échappement, grâce à une réduction des NOx par l'ammoniac, lequel est issu de l'urée en solution aqueuse portée à une température élevée et ceci en présence d'oxygène pour produire de l'azote et de l'eau.

Cette unité de commande électronique 10 opère simultanément plusieurs opérations. L'unité de commande électronique 10 détermine la quantité d'oxydes d'azote réellement produite par le moteur 2 pour un point de fonctionnement donné. Cette quantité d'oxydes d'azote réellement produite est mesurée par la sonde 8, mais peut également être déterminé avec un estimateur qui modélise émission à la source. Dans le cas où cette quantité est modélisée, l'unité de commande électronique 10 tient compte de l'ensemble des variables impactant la production des oxydes d'azote dans le moteur 2.

Le moteur 2 est calibré pour répondre à un cahier des charges s'articulant autour d'un compromis entre consommation, pollution, agrément, bruit et performance. Ce compromis doit être optimisé dans toutes les situations de vie du moteur 2, à savoir les phases de démarrage, moteur froid ou chaud, un fonctionnement en altitude, un fonctionnement dans un environnement très froid ou très chaud.

En prenant pour exemple le cas d'un environnement d'altitude élevée, il n'est pas possible de garantir un optimum pour chacune des prestations énumérées ci-dessus. La priorité est alors conventionnellement donnée aux prestations visibles pour le conducteur, à savoir la performance, l'agrément et le bruit. Dans ces conditions, les émissions de NOx sont largement supérieures aux niveaux observés en condition de pression nominale (niveau de la mer, 0 mètre).

L'unité de commande électronique 10 détermine une quantité limite d'oxydes d'azote dans les gaz d'échappement et qui doit être évacuée dans l'atmosphère. Cette quantité sera ci-après dénommée, cible 16. La quantité réelle de NOx évacuée dans l'atmosphère ne doit pas être supérieure à celle donnée par la cible 16.

La cible 16 d'oxydes d'azote est déterminée en fonction de la pression extérieure. La pression extérieure est mesurée instantanément par le capteur 9 de pression. La cible 16 d'oxydes d'azote est déterminée pour qu'en fonction de la pression extérieure, sa valeur respecte avantageusement les normes d'émissions en vigueur.

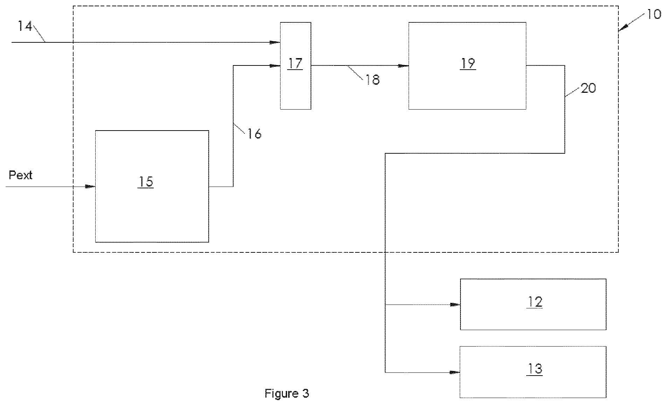

Plus précisément et en référence à la figure 3, la quantité réelle d'oxydes d'azote produite par le moteur 2 est envoyée vers l'unité de commande électronique 10, cette quantité étant ci-après dénommée information 14 NOx à la source. Au même moment, la pression extérieure Pₑₓₜ mesurée est également envoyée vers l'unité de commande électronique 12, et plus particulièrement vers une fonction 15 de transfert dans L'unité de commande électronique 12 qui fournit la cible 16 d'oxydes d'azote, avantageusement conforme aux normes en vigueur en matière d'émissions de NOx. Cette fonction de transfert peut se présenter sous la forme d'une cartographie implémentée dans le support mémoire du l'unité de commande électronique 10 et établissant en fonction de la pression extérieure, Pₑₓₜ, la valeur de la consigne 16 de NOx à ne pas dépasser en sortie d'échappement.

L'information 14 d'oxydes d'azote, NOx, produits à la source, autrement lors de la combustion dans le moteur, et la cible 16 sont comparées dans un comparateur 17. Dans l'hypothèse où l'information 14 NOx est supérieure à la cible 16, le comparateur 17 détermine la quantité de NOx à traiter ci-après dénommée, consigne 18 à traiter, afin que la quantité de NOx réellement émise soit égale à la cible 16. La consigne 18 à traiter est obtenue par la détermination de l'écart entre la quantité d'oxydes d'azote réellement produite par le moteur 2 au point de fonctionnement moteur donné (information 14) et la cible 16 de quantité d'oxydes d'azote à ne pas dépasser.

Cette consigne 18 à traiter est envoyée vers un module de calcul 19 qui détermine la quantité requise d'agent réducteur des oxydes d'azote à injecter pour traiter cet écart, ci-après dénommé consigne 20 d'urée. Avantageusement, est vérifié que la consigne 20 d'urée est compatible avec les limites physiques et contraintes de durabilité des composants, à savoir l'injecteur 12 et la pompe 13.

La consigne 20 d'agent réducteur est envoyée à la fois à l'injecteur 12 et à la pompe 13 afin que ceux-ci injectent l'agent réducteur en amont du SCR 7. Le fait que la cible 16 soit calculée en fonction de la pression extérieure permet de limiter les débits injectés pour mille kilomètres parcourus.

Un premier avantage du procédé qui vient d'être décrit est d'augmenter la longévité du système 4 de dépollution, et tout particulièrement de la pompe 13 et de l'injecteur 12.

Un deuxième avantage est une économie significative d'agent réducteur, par exemple Adblue ®. En effet, c'est l'écart entre les NOx émis par le moteur et la valeur de consigné qui donne la quantité de NOx à dépolluer et donc la quantité d'agent réducteur à injecter. Un autre avantage c'est de modifier le mode de combustion lors que le système de post-traitement ne sait plus faire la cible émission seul.

## Revendications

1. Procédé de dépollution des oxydes d'azotes issus d'un moteur (2) à combustion interne comprenant une ligne d'échappement (3), ce procédé de dépollution étant au moins partiellement mis en oeuvre dans un catalyseur (7) disposé dans la ligne d'échappement (3), ce procédé comprenant les étapes de :
- détermination d'une quantité (14) d'oxydes d'azote réellement produite par le moteur (2) pour un point de fonctionnement moteur donné,
- détermination d'une cible (16) de quantité d'oxydes d'azote dans les gaz d'échappement au point de fonctionnement moteur donné à ne pas dépasser en sortie de la ligne d'échappement (3),
- comparaison de la quantité d'oxydes d'azote réellement produite par le moteur (2) au point de fonctionnement moteur donné avec cette cible (16) de quantité d'oxydes d'azote à ne pas dépasser, et si la quantité d'oxydes d'azote réellement produite par le moteur (2) est supérieure à cette cible (16) de quantité d'oxydes d'azote à ne pas dépasser, traitement des oxydes d'azote, tant que la quantité d'oxydes d'azote réellement produite (2) est supérieure à la cible (16) de quantité d'oxydes d'azote à ne pas dépasser à la sortie de la ligne d'échappement (3),
**caractérisé en ce que** la cible (16) de quantité d'oxydes d'azote dans les gaz d'échappement à ne pas dépasser à la sortie de la ligne d'échappement (3) est déterminée en fonction de la pression extérieure (Pext).

2. Procédé de dépollution selon la revendication 1, **caractérisé en ce que** l'étape de comparaison (17) comprend la détermination de l'écart entre la quantité d'oxydes d'azote réellement produite par le moteur (2) au point de fonctionnement moteur donné et la cible (16) de quantité d'oxydes d'azote à ne pas dépasser.

3. Procédé de dépollution selon la revendication 2, **caractérisé en ce que** l'étape de traitement des oxydes d'azote comprend le calcul d'une quantité d'un agent réducteur des oxydes d'azote requise pour traiter cet écart et l'injection de cet agent réducteur dans la ligne (3) d'échappement.

4. Procédé de dépollution selon la revendication 3, **caractérisé en ce que** la quantité d'un agent réducteur des oxydes d'azote requise pour traiter cet écart est compatible avec les limites physiques et contraintes de durabilité des composants.

5. Procédé de dépollution selon l'une quelconque des revendications précédentes, **caractérisé en ce que** la pression extérieure (Pext) est mesurée de manière continue grâce à un capteur (9) de pression.

6. Procédé de dépollution selon l'une quelconque des revendications précédentes, **caractérisé en ce que** la détermination de la quantité (14) d'oxydes d'azote réellement produite par le moteur (2) se fait par une sonde (8) positionnée en aval du moteur (2) et en amont du catalyseur (7) ou par un estimateur.

7. Procédé de dépollution selon l'une quelconque des revendications précédentes, **caractérisé en ce que** la détermination de la cible (16) de quantité d'oxydes d'azote dans les gaz d'échappement à ne pas dépasser en sortie de la ligne d'échappement (3) se fait à l'aide d'une fonction de transfert dont l'entrée est la pression extérieure (Pext) et la sortie est la cible (16) de quantité d'oxydes d'azote dans les gaz d'échappement à ne pas dépasser à la sortie de la ligne d'échappement (3).

8. Système (4) de dépollution comprenant :
- un catalyseur de réduction catalytique sélectif (7),
- un réservoir (5) d'un agent réducteur des oxydes d'azote,
- un circuit (11) d'injection muni d'une pompe (13) et d'un injecteur (12) en amont du catalyseur de réduction catalytique sélectif (7),
**caractérisé en ce qu'**il comprend :
- une unité de commande électronique (10) comprenant les moyens d'acquisition, de traitement par instructions logicielles stockées dans une mémoire ainsi que les moyens de commande requis à mise en oeuvre du procédé de dépollution selon l'une quelconque des revendications précédentes.

9. Système (4) de dépollution selon la revendication 8, **caractérisé en ce que** l'agent réducteur est de l'ammoniac ou un précurseur liquide de l'ammoniac.

10. Véhicule (1) automobile, **caractérisé en ce que** celui-ci comprend un système (4) de dépollution selon l'une quelconque des revendications 8 ou 9.

## Patentansprüche

1. Verfahren zur Dekontaminierung der aus einem Innenverbrennungsmotor (2), eine Auspuffleitung (3) umfassend, stammenden Stickstoffoxyde, wobei dieses Verfahren zur Dekontaminierung zumindest teilweise in einem Katalysator (7) angewendet wird, der in der Auspuffleitung (3) angeordnet ist, wobei dieses Verfahren die folgenden Schritte umfasst:
- Bestimmen einer Menge (14) an Stickstoffoxyden, die tatsächlich vom Motor (2) für einen gegebenen Motorbetriebspunkt erzeugt werden,
- Bestimmen eines Mengenziels (16) an Stickstoffoxyden in den Abgasen am gegebenen Motorbetriebspunkt, das am Ausgang der Auspuffleitung (3) nicht überschritten werden darf,
- Vergleich der Menge an Stickstoffoxyden, die tatsächlich vom Motor (2) am gegebenen Motorbetriebspunkt erzeugt werden, mit diesem Mengenziel (16) an Stickstoffoxyden, das nicht überschritten werden darf, und wenn die Menge an Stickstoffoxyden, die tatsächlich vom Motor (2) erzeugt werden, größer ist, als dieses Mengenziel (16) an Stickstoffoxyden, das nicht überschritten werden darf, die Behandlung der Stickstoffoxyde, solange die Menge an Stickstoffoxyden, die tatsächlich erzeugt werden (2), größer ist, als das Mengenziel (16) an Stickstoffoxyden, das am Ausgang der Auspuffleitung (3) nicht überschritten werden darf,
**dadurch gekennzeichnet, dass** das Mengenziel (16) an Stickstoffoxyden in den Auspuffgasen, das am Ausgang der Auspuffleitung (3) nicht überschritten werden darf in Abhängigkeit vom externen Druck (Pext) bestimmt wird.

2. Verfahren zur Dekontaminierung nach Anspruch 1, **dadurch gekennzeichnet, dass** der Schritt zum Vergleichen (17) die Bestimmung der Abweichung zwischen der Menge an Stickstoffoxyden, die tatsächlich vom Motor (2) am gegebenen Motorbetriebspunkt erzeugt wird und dem Mengenziel (16) an Stickstoffoxyden, das nicht überschritten werden darf, umfasst.

3. Verfahren zur Dekontaminierung nach Anspruch 2, **dadurch gekennzeichnet, dass** der Schritt zur Behandlung der Stickstoffoxyde die Berechnung einer Menge eines Reduktionsmittels der Stickstoffoxyde umfasst, die nötig ist, um diese Abweichung zu behandeln, sowie die Injektion dieses Reduktionsmittels in die Auspuffleitung (3).

4. Verfahren zur Dekontaminierung nach Anspruch 3, **dadurch gekennzeichnet, dass** die Menge eines Reduktionsmittels der Stickstoffoxyde, die nötig ist, um diese Abweichung zu behandeln, mit den physikalischen Grenzen und den Anforderungen an die Lebensdauer der Komponenten kompatibel ist.

5. Verfahren zur Dekontaminierung nach irgendeinem der vorhergehenden Ansprüche, **dadurch gekennzeichnet, dass** der externe Druck (Pext) dank eines Drucksensors (9) ununterbrochen gemessen wird.

6. Verfahren zur Dekontaminierung nach irgendeinem der vorhergehenden Ansprüche, **dadurch gekennzeichnet, dass** die Bestimmung der Menge (14) an Stickstoffoxyden, die tatsächlich vom Motor (2) erzeugt werden durch eine Sonde (8) erfolgt, die stromabwärts des Motors (2) und stromaufwärts des Katalysators (7) oder durch einen Schätzer positioniert wird.

7. Verfahren zur Dekontaminierung nach irgendeinem der vorhergehenden Ansprüche, **dadurch gekennzeichnet, dass** die Bestimmung des Mengenziels (16) an Stickstoffoxyden in den Abgasen, die am Ausgang der Auspuffleitung (3) nicht überschritten werden darf, anhand einer Übertragungsfunktion erfolgt, deren Eingang der externe Druck (Pext), und deren Ausgang das Mengenziel (16) an Stickstoffoxyden in den Abgasen ist, die am Ausgang der Auspuffleitung (3) nicht überschritten werden darf.

8. System (4) zur Dekontaminierung, Folgendes umfassend:
- einen Katalysator zur selektiven katalytischen Reduktion (7),
- einen Behälter (5) mit einem Reduktionsmittel der Stickstoffoxyde,
- einen Injektionskreis (11), der mit einer Pumpe (13) und einem Injektor (12) stromaufwärts des Katalysators zur selektiven katalytischen Reduktion (7) versehen ist,
**dadurch gekennzeichnet, dass** es Folgendes umfasst:
eine elektronische Steuerungseinheit (10), Mittel zur Akquirierung, zur Behandlung durch Software-Befehle umfassend, die in einem Speicher abgelegt sind, sowie Mittel zum Steuern, die für die Umsetzung des Verfahrens zur Dekontaminierung nach irgendeinem der vorhergehenden Ansprüche nötig sind.

9. System (4) zur Dekontaminierung nach Anspruch 8, **dadurch gekennzeichnet, dass** das Reduktionsmittel Ammoniak oder ein flüssiges Vorprodukt von Ammoniak ist.

10. Kraftfahrzeug (1), **dadurch gekennzeichnet, dass** dieses ein System (4) zur Dekontaminierung nach irgendeinem der Ansprüche 8 oder 9 umfasst.

## Claims

1. Decontamination of nitrogen oxide from an internal combustion engine (2) including an exhaust pipe (3), this decontamination process being at least partially implemented in the catalyser (7) fitted into the exhaust pipe (3), this process includes the following stages:
- determination of the quantity (14) of nitrogen oxide actually produced by the engine (2) for a given engine operating point,
- determination of a target (16) quantity of nitrogen oxide in the exhaust gas at the given engine operating point not to be exceeded when leaving the exhaust pipe (3),
- comparison of the quantity of nitrogen oxide actually produced by the engine (2) at the given operational point with this targeted (16) quantity of nitrogen oxide produced by the engine, not to be exceeded, and if the quantity of nitrogen oxide actually produced by the engine (2) is greater than this target (16) of nitrogen oxide not to be exceeded, treatment of the nitrogen oxide, provided that the quantity of nitrogen oxide actually produced (2) is greater than the target (16) quantity of nitrogen oxide not to be exceeded on leaving the exhaust pipe (3),
**characterised in that** the target (16) quantity of nitrogen oxide in the exhaust gas not to be exceeded on leaving the exhaust pipe (3) is determined as a function of the external pressure (Pext).

2. Decontamination process according to claim 1, **characterised in that** the comparison stage (17) includes determination of the difference between the quantity of nitrogen oxide actually produced by the engine (2) at the given operational point and the target (16) of the quantity of nitrogen oxide not to be exceeded.

3. Decontamination process according to claim 2, **characterised in that** the treatment of nitrogen oxide stage includes calculating the quantity of nitrogen oxide reducing agent required to treat this difference and the injection of this reducing agent in the exhaust pipe (3).

4. Decontamination process according to claim 3, **characterised in that** the quantity of nitrogen oxide reducing agent required to treat this difference is compatible with the physical limitations and restrictions of the component durability.

5. Decontamination process according to any of the previous claims, **characterised in that** the external pressure (Pext) is measured in a continuous manner thanks to a pressure sensor (9).

6. Decontamination process according to one of the previous claims, **characterised in that** the determination of the quantity (14) of nitrogen oxide actually produced by the engine (2) is done by a sensor (8) positioned downstream from the engine (2) and upstream from the catalyser (7) or by an estimator.

7. Decontamination process according to one of the previous claims, **characterised in that** the determination of the target (16) quantity of nitrogen oxide in the exhaust gas on leaving the exhaust pipe (3) is done with the help of a transfer function the input for which is the external pressure (Pext) and the output is the target (16) quantity of nitrogen oxide in the exhaust gas not to be exceeded on leaving the exhaust pipe (3).

8. Decontamination system (4) comprising:
- selective catalytic reduction catalyser (7),
- a reservoir (5) holding a nitrogen oxide reducing agent,
- an injection circuit (11) fitted with a pump (13) and an injector (12) upstream from the selective catalytic reduction catalyser (7), **characterised in that** it comprises:
- an electronic control unit (10) including the acquisition means, the treatment by software instructions stored in a memory as well as the control means required to implement the decontamination process according to one of the previous claims.

9. Decontamination system (4) according to claim 8, **characterised in that** the reducing agent is ammonia or a liquid ammonia precursor.

10. Motor vehicle (1), **characterised in that** it includes a decontamination system (4) according to either of claims 8 or 9.
